# EUROPÄISCHE PATENTANMELDUNG

(11) **EP 0 798 504 A1**
(43) Veröffentlichungstag der Anmeldung: **01.10.1997**
(21) Anmeldenummer: 97100626.7
(22) Anmeldetag: 16.01.1997
(51) Int. Cl.: F16L 59/02, F16L 59/14

(54) **System zur Wärme- und/oder Schalldämmung von Rohrleitungen**

(30) Priorität: 29.02.1996 DE 19607677
(71) Anmelder: E. Missel GmbH, D-70374 Stuttgart (DE)
(72) Erfinder:
(74) Vertreter: Finsterwald, Manfred, Dipl.-Ing., Dipl.-Wirtsch.-Ing.

(57) **Zusammenfassung**

System zur Wärme und/oder Schalldämmung von Rohrleitungen, insbesondere von auf Rohdecken verlegten Rohren (1), welche selbst fluidführend sind oder fluidführende Rohre aufnehmen, mit einem Dämmteil (3), welches wenigstens eine Dämmschicht (2) zwischen Rohr (1) und Decke in Form eines im Querschnitt im wesentlichen rechteckigen Streifens umfaßt, dessen Breite zumindest gleich oder vorzugsweise etwas größer ist als der Außendurchmesser des Rohres (1), wobei zur Vermeidung einer Zwickelbildung zwischen dem gedämmten Rohr (1) einerseits und der im jeweiligen Bauwerksaufbau seitlich angrenzenden Wärme- und Trittschalldämmung ein Abdeckteil (4) vorgesehen ist, welches in einer der Dämmschicht (2) in Bezug auf das Rohr(1) diametral gegenüberliegenden Anordnung mit dem Rohr (1) und/oder dem Dämmteil (3) verbindbar ist, und wobei das Abdeckteil (4) eine Außenkontur aufweist, die sich mit der Außenkontur des Dämmteils (3) zu einer im wesentlichen quaderförmigen Außenkontur ergänzt.

## Beschreibung

Die vorliegende Erfindung betrifft ein System zur Wärme- und/oder Schalldämmung von Rohrleitungen, insbesondere von auf Rohdecken verlegten Rohren, die selbst fluidführend sein oder fluidführende Rohre aufnehmen können, mit einem Dämmteil, welches wenigstens eine Dämmschicht zwischen Rohr und Decke in Form eines im Querschnitt im wesentlichen rechteckigen Streifens umfaßt, dessen Breite zumindest gleich und vorzugsweise etwas größer ist als der Außendurchmesser des Rohres.

Wesentlich ist bei derartigen Systemen, daß zumindest im eingebauten Zustand, wenn sich das Gewicht des Estrichs auf die formschlüssig zwischen der seitlich angrenzenden Wärme- und Trittschalldämmung angeordnete Rohrdämmung auswirkt, eine im wesentlichen quaderförmige Außenkontur erzielt wird. Diese quaderförmige Außenkontur ermöglicht es, insbesondere die von Runddämmungen her bekannten Zwickelbildungen zwischen Dämmaterial und seitlich angrenzender Wärme- und Trittschalldämmung zu vermeiden, so daß das Aufbringen des Estrichs ohne vorherige Ausgleichsschüttung, also Auffüllen der Zwickel mit kleinteiligem Material, erfolgen kann.

Aus der DE 295 09 746 U1 ist ein System zur Wärme- und/oder Schalldämmung von Rohrleitungen der eingangs genannten Art bekannt, bei welchem ein Schutzrohr zur Aufnahme eines fluidführenden Rohres decken- bzw. bodenseitig mit einer Dämmstoffschicht verbunden ist, wobei es sich bei dem Schutzrohr um ein Wellrohr und bei der Dämmschicht um ein flexibles Kunststoffmaterial handeln kann. Dämmschicht und Rohr sind fest miteinander verbunden.

Mit einer derartigen Anordnung kann die nachteilige Zwickelbildung zwischen der Rohranordnung und der im jeweiligen Bauwerksaufbau seitlich angrenzenden Wärme- und Trittschalldämmung insbesondere dann nicht verhindert werden, wenn das Rohr oder das Schutzrohr relativ steif ist und auch bei aufgebrachtem Estrich seine kreisförmige Kontur im wesentlichen beibehält.

Aufgabe der Erfindung ist es, diesen Nachteil zu vermeiden und auch bei Systemen mit relativ steifem Rohr oder Schutzrohr ein Aufbringen des Estrichs ohne das Erfordernis einer vorhergehenden Ausgleichsschüttung zu ermöglichen.

Diese Aufgabe wird erfindungsgemäß dadurch gelöst, daß ein Abdeckteil vorgesehen ist, welches in einer der Dämmschicht in Bezug auf das Rohr diametral gegenüberliegenden Anordnung mit dem Rohr und/oder dem Dämmteil verbindbar ist, und daß das Abdeckteil eine Außenkontur aufweist, die sich mit der Außenkontur des Dämmteils zu einer im wesentlichen quaderförmigen Außenkontur ergänzt.

Durch den Einsatz eines Abdeckteils wird auf besonders einfache Weise eine insgesamt quaderförmige Außenkontur des Wärme und/oder Schalldämmungssystems erzielt und damit erreicht, daß die Anordnung aus Dämmung und Rohr formschlüssig zwischen seitlich angrenzender Wärme- und Trittschalldämmung und dem Estrich im Bauwerksaufbau angebracht werden kann, und zwar auch bei einer relativ steifen Struktur des Rohres oder Schutzrohres. Störende Zwickelbildungen sind dadurch ausgeschlossen und weitere Ausgleichs- und Dämmschichten oberhalb des Rohres können entfallen.

Ein weiterer Vorteil der Erfindung besteht darin, daß durch die Wahl der Abmessungen des Abdeckteils auch eine Anpassung an die Höhe der jeweiligen Wärme- und Trittschalldämmung erfolgen kann und somit stets eine bündige Integration der wärme- und/oder schallgedämmten Rohranordnung in die Wärme- und Trittschalldämmung möglich ist.

Besonders vorteilhafte Ausgestaltungen der Erfindung sind in den Unteransprüchen aufgeführt.

So können das Dämmteil und das Abdeckteil jeweils an ihrer dem Rohr zugewandten Seite der Rohrkontur zumindest teilweise angepaßt sein. Außerdem können an diese seitlich zum Rohr verlaufende Wände angefügt sein. Beide Maßnahmen bewirken, daß das Rohr beim Verlegen innerhalb des Dämmsystems vorfixiert ist. Außerdem ist dadurch die Verbindungsfläche zwischen Dämmung und Rohr für ein eventuelles Verkleben oder Verschweißen vergrößert.

Zur einfachen Befestigung des Dämmsystems an den Rohrleitungen können sowohl das Dämmteil als auch das Abdeckteil auf das Rohr aufklippsbar ausgestaltet sein. Dämmteil und Abdeckteil können aber auch miteinander verklippsbar oder über Klettverschlüsse oder Durchstecklaschen verbindbar sein. Auch dadurch wird eine einfache Verbindung gewährleistet.

Eine besonders einfache Anordnung ergibt sich, wenn das Abdeckteil als einfacher Steg ausgebildet ist. Das Abdeckteil kann dabei auch seitlich verschwenkbar an dem Dämmteil angelenkt sein. Eine besonders dichte Anordnung ergibt sich, wenn das Abdeckteil im Querschnitt im wesentlichen T-förmig ausgestaltet ist, mit einem Fußteil, der komplementär zwischen den das Rohr seitlich umfassenden Wänden des Dämmteils angeordnet und an die Außenkontur des Rohres angepaßt ist.

Zur parallelen Verlegung von zwei oder mehr Rohren sind bevorzugt Systeme vorgesehen, bei denen das Dämmteil zur Aufnahme von einer entsprechenden Anzahl von Rohren ausgebildet und ein gemeinsames Abdeckteil vorgesehen ist.

Grundsätzlich können Abdeckteil und Dämmteil aus demselben oder einem ähnlichen zur Wärme- und/oder Schalldämmung geeigneten Material bestehen, und das Abdeckteil kann spiegelsymmetrisch zum Dämmteil ausgebildet sein, wodurch die Funktion einer Doppel-Kompakt-Dämmhülse nachgebildet wird. Ebenso können Dämmteil und Abdeckteil aus einem flexiblen Material wie beispielsweise Schaumstoff oder Kunststoffverbund aus Polyethylen, Polypropylen, Polyurethan, Kautschuk, Baumwolle oder Flachs bestehen, oder auch aus einem steifen Material wie beispielsweise Hartschäume aus Polyurethan, Glas, Gips oder Mineralfaser.

Das erfindungsgemäße System ist außer für gerade Rohrleitungsabschnitte auch geeignet für gebogene Rohrleitungsabschnitte, Kreuzungsabschnitte, Abzweigungen und Verbindungsabschnitte zu Verbrauchern, wie Heizkörpern sowie zu Verteilern und Sammlern.

Ausführungsbeispiele der Erfindung sind in der Zeichnung dargestellt und werden nachfolgend beschrieben. Es zeigen, jeweils in schematischer Querschnittsdarstellung,
- Figur 1: ein Ausführungsbeispiel der Erfindung mit der Rohrkontur weitgehend angepaßtem Abdeckteil,
- Figur 2: ein Ausführungsbeispiel mit streifenförmigem Abdeckteil,
- Figur 3: ein Ausführungsbeispiel mit der Rohrkontur weitgehend angepaßtem Dämmteil,
- Figur 4: ein Ausführungsbeispiel mit einem das Dämmteil von oben übergreifenden Abdeckteil,
- Figur 5: ein Ausführungsbeispiel mit einem im Querschnitt im wesentlichen T-förmigen Abdeckteil,
- Figur 6: ein Ausführungsbeispiel für zwei mindestens abschnittsweise parallel verlaufende Rohre,
- Figur 7: ein Ausführungsbeispiel für vier mindestens abschnittsweise parallel verlaufende Rohre, und
- Figur 8 bis 11: Ausführungsbeispiele mit im wesentlichen spiegelsymmetrisch zum Dämmteil ausgebildetem Abdeckteil und unterschiedlichen Befestigungsvarianten des Abdeckteils am Dämmteil.

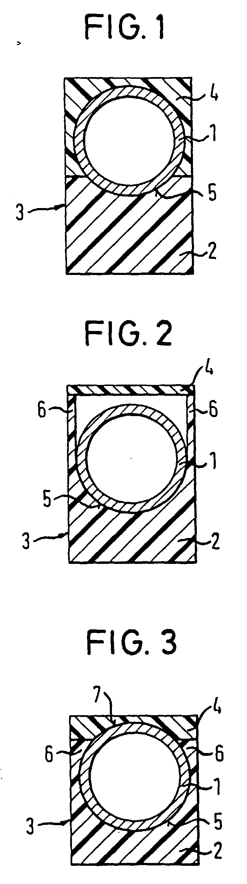

Figur 1 zeigt eine Anordnung gemäß dem erfindungsgemäßen Wärme- und/oder Schalldämmsystem mit einem Rohr 1, welches selbst Fluid fuhren oder als Schutzrohr für ein fluidführendes Rohr ausgebildet sein kann, sowie mit einem decken- bzw. bodenseitigen Dämmteil 3, welches eine zwischen dem Rohr 1 und der Rohdecke angeordnete Dämmschicht 2 umfaßt. Die Dämmschicht 2 ist im Querschnitt im wesentlichen rechteckig und besitzt eine Dicke, die den bestehenden Bestimmungen der Wärme- und/oder Schalldämmung zwischen dem Rohr 1 und der Decke bzw. dem Boden oder der Wand erfüllt.

Bevorzugt besteht die Dämmschicht 2 aus wärme- und/oder schalldämmendem Kunststoff wie Polyethylenschaum, Kautschukprodukte, Polyurethanschaum und andere, der geschlossenzellig oder offenzellig, flexibel oder hart, monolithisch oder aus Verbundschichten aufgebaut sein kann. Die Breite der Dämmschicht 2 ist, wie dargestellt, vorzugsweise etwas größer als der Außendurchmesser des Rohres 1, kann aber auch etwa dem Rohraußendurchmesser entsprechen.

Die Dämmschicht 2 ist mit einer zum Rohr 1 komplementären Ausnehmung 5 versehen, die das aufgelegte Rohr 1 fixiert und gegebenenfalls für eine ausreichende Verbindungsfläche zwischen Dämmschicht 2 und Rohr 1 sorgt. Die Verbindung kann beispielsweise durch Verkleben oder Verschweißen erfolgen, ist aber nicht unbedingt erforderlich. Das heißt, das Rohr 1 kann auch einfach auf das Dämmteil 3 aufgelegt sein.

Wesentlich für die Erfindung ist das Vorsehen eines Abdeckteils 4, das auf das Rohr 1 von oben her aufgesetzt oder aufgeklippst werden kann und einen im wesentlichen rechteckigen Querschnitt aufweist, der sich mit dem Querschnitt des Dämmteils 3 so ergänzt, daß insgesamt eine quaderförmige Außenkontur der Anordnung erhalten wird. Dies ermöglicht es, die Anordnung derart in einen Bauwerksaufbau zu integrieren, daß bei auf der Rohdecke aufliegender Anordnung die Wärme- und Trittschalldämmung seitlich bündig angeschlossen werden kann und aufgrund der gleichen Höhe von Wärme- und Trittschalldämmung und dem erfindungsgemäßen Wärme- und/oder Schalldämmsystem eine ebene, zwickelfreie Oberfläche zum Aufbringen des Estrichs geschaffen wird.

Figur 2 zeigt eine Ausführungsvariante der Ausgestaltung nach Figur 1, bei welcher an der Dämmschicht 2 seitlich zum Rohr 1 verlaufende Wände 6 angeformt sind. Dadurch wird eine Aufnahme für das Rohr 1 in dem Dämmteil 3 geschaffen, die durch ein Abdeckteil 4 verschlossen werden kann, welches als einfacher Flachstreifen ausgebildet ist. Das Abdeckteil 4 kann mit den Seitenwänden 6 fest verbunden, insbesondere verklebt werden, oder auch nur auf diese aufgelegt werden. Es entsteht wieder eine wärme- und schallgedämmte Rohranordnung mit quaderförmiger Außenkontur.

Figur 3 zeigt eine Ausführungsform, bei der das Abdeckteil 4 analog zur Ausführungsform nach Figur 2 streifenförmig ausgebildet ist, wobei aber die dem Rohr 1 zugewandte Seite eine zum Rohr 1 komplementäre Ausnehmung 7 aufweist, so daß das Abdeckteil 4 nicht nur mit den Seitenwänden 6 des Dämmteils 3 sondern auch mit dem Rohr 1 verbunden, insbesondere verklebt werden kann. Das Dämmteil 3 ist bei dieser Ausgestaltung so ausgebildet, daß das Rohr 1 in dieses eingeklippst werden kann und auf diese Weise gehalten wird. Jedoch kann das Rohr 1 auch zusätzlich in der entsprechenden Aufnahme des Dämmteils 3 verklebt oder verschweißt werden.

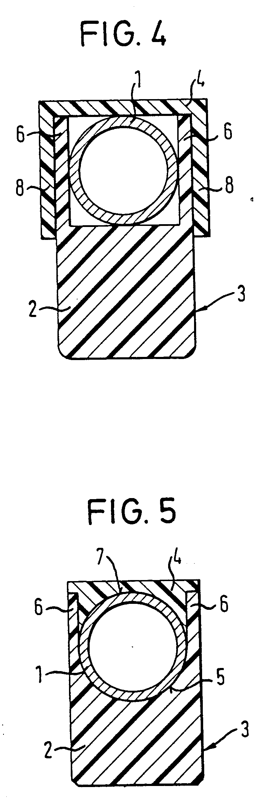

Bei der in Figur 4 dargestellten Ausgestaltung weist das Dämmteil 3 wiederum seitlich zum Rohr 1 verlaufende an die Dämmschicht 2 angeformte Seitenwände 6 auf, wobei hier jedoch die Dämmschicht 2 nicht an die Außenkontur des Rohres 1 angepaßt ist. Das Abdeckteil 4 weist bei dieser Ausgestaltung einen U-förmigen Querschnitt auf und übergreift mit seinen beiden durch die Schenkel der U-Form gebildeten seitlichen Wänden 8 die beiden Seitenwände 6 des Dämmteils 3. Aufgrund der geringen Dicke der Wände 8 entsteht so widerum eine im wesentlichen quaderförmige Außenkontur der Anordnung.

Bei der in Figur 5 gezeigten Ausgestaltung ist das mit seitlich zum Rohr 1 angeordneten Wänden 6 versehene Dämmteil 3 wieder der Außenkontur des Rohres 1 nachgebildet. Das Abdeckteil 4 weist bei dieser Ausgestaltung einen im wesentlichen T-förmigen Querschnitt auf, wobei der Fuß der T-Form ebenfalls zur Außenkontur des Rohres 1 komplementär ausgebildet und so zwischen die Wände 6 des Dämmteils 3 eingepaßt ist, daß insgesamt eine dichte und wiederum eine quaderförmige Außenkontur aufweisende Anordnung entsteht.

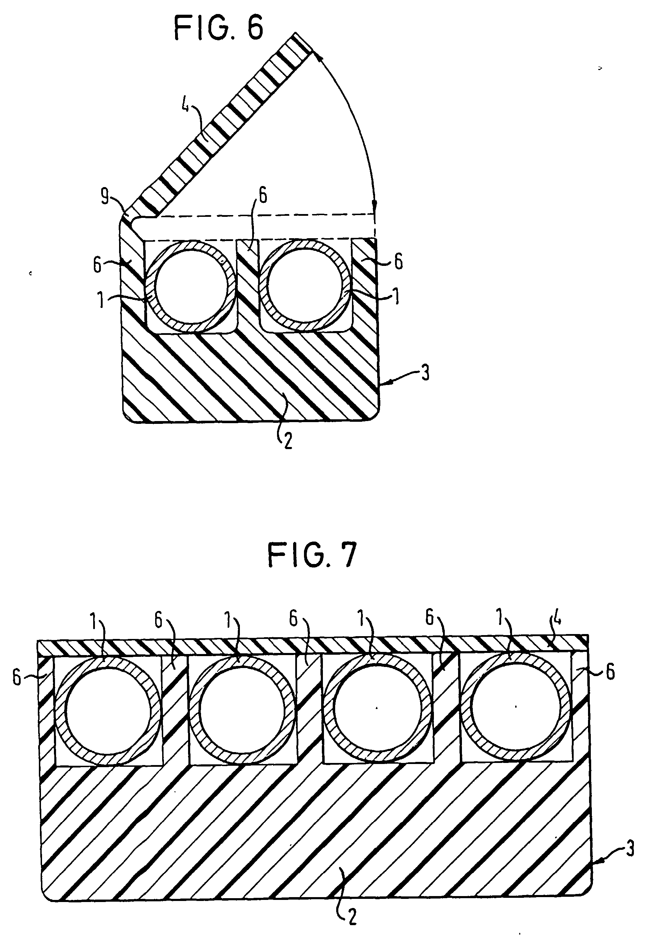

Figur 6 zeigt eine Ausgestaltung der Erfindung für zwei zumindest abschnittsweise parallel verlaufende Rohre 1. Die Dämmschicht 2 des Dämmteils 3 weist hier ein Breite auf, welche die Gesamtbreite der nebeneinander liegenden Rohre 1 etwas übersteigt. An die Dämmschicht sind auch hier seitlich zu den Rohren 1 verlaufenden Wände 6 angeformt, wobei eine Wand 6 zwischen den beiden Rohren 1 und jeweils eine Wand 6 an den beiden Außenseiten der Rohre 1 verläuft. Für die beiden Rohre 1 ist ein gemeinsames Abdeckteil 4 vorhanden, welches streifenförmig ausgebildet und mit einer Längsseite an einer der beiden außenliegenden Wände 6 verschwenkbar angelenkt ist. Das Abdeckteil 4 ist bei der dargestellten Ausgestaltung an die genannte Wand 6 des Dämmteils 3 angeformt, wobei im Übergangsbereich eine Materialverdünnung 9 vorgesehen ist, um eine für die Verschwenkung des Abdeckteils 4 erforderliche Flexibilität zu schaffen. Nach dem Einlegen der beiden Rohre 1 wird das Abdeckteil 4 auf das Dämmteil 3 herabgeschwenkt. In dieser Position kann es mit dem Dämmteil 3 verbunden, insbesondere verklebt werden.

Figur 7 zeigt eine Ausgestaltung für vier zumindest abschnittsweise parallel verlaufende Rohre 1, welche im wesentlichen mit der Ausgestaltung von Figur 6 übereinstimmt. Abgesehen von der Verdoppelung der Rohrzahl besteht der einzige Unterschied darin, daß das Abdeckteil 4 hier nicht an das Dämmteil 3 angelenkt ist, sondern auf dieses einfach aufgelegt wird.

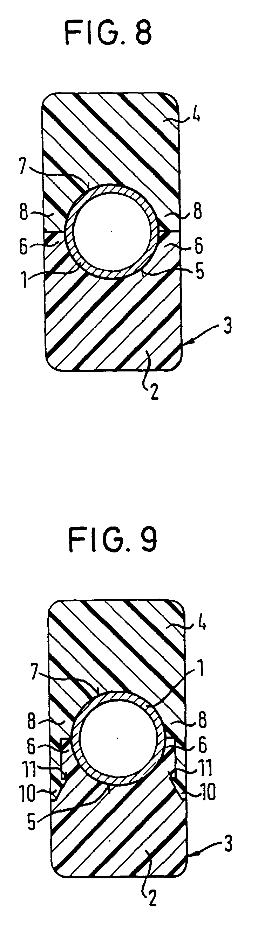

Die Figuren 8 bis 11 zeigen Ausgestaltungen des erfindungsgemäßen Systems, bei welchen das Abdeckteil 4 im wesentlichen spiegelsymmetrisch zum Dämmteil 3 ausgestaltet ist. Die Ausgestaltungen der Figuren 8 bis 11 imitieren damit jeweils eine sogenannte Doppel-Kompakt-Dämmhülse. In allen Fällen sind sowohl Dämmteil 3 als auch Abdeckteil 4 zur Außenkontur des Rohres 1 komplementär ausgebildet und ergänzen sich wieder zu einer Anordnung mit quaderförmiger Außenkontur. Die dargestellten Ausführungsvarianten unterscheiden sich lediglich in der Art der Verbindung zwischen Abdeckteil 4 und Dämmteil 3.

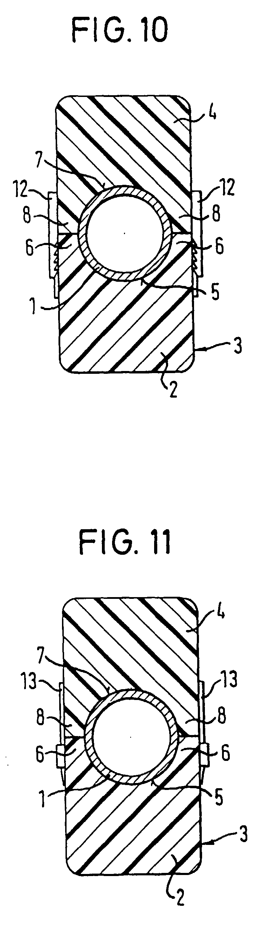

Bei der in Figur 8 dargestellten Variante ist das Abdeckteil 4 entweder lediglich auf das Dämmteil 3 aufgelegt, oder aber es ist mit diesem verbunden, insbesondere verklebt oder verschweißt. Bei der Variante von Figur 9 weist das Abdeckteil 4 seitlich angeordnete, zum Dämmteil 3 weisende hakenartige Verlängerungen 10 auf, die entsprechend hinterschnittene Nuten 11 in den Seitenwänden 6 des Dämmteils 3 hintergreifen. Bei der Variante von Figur 10 sind auf den beiden Außenseiten von Dämmteil 3 und Abdeckteil 4 angeordnete Klettverschlüsse 12 und bei der Variante von Figur 11 Durchstecklaschenverschlüsse 13 vorgesehen.

Alle in den Figuren 8 bis 11 gezeigten Verbindungsvarianten zwischen Dämmteil 3 und Abdeckteil 4 können im übrigen auch bei den anderen Ausgestaltungen der Erfindung eingesetzt werden. Außerdem kann in allen Fällen das Rohr 1 selbst das fluidführende Rohr sein, oder es kann als Schutzrohr dienen, welches ein fluidführendes Rohr aufnimmt. Insbesondere bei der Ausgestaltung des Rohres 1 als Schutzrohr kann dieses bereits bei der Herstellung mit dem Dämmteil 3 verbunden werden.

Wesentlich für alle Ausführungsformen ist, daß das Dämmteil 3 und das Abdeckteil 4 unter gleichzeitiger Aufnahme des jeweiligen Rohres 1 eine im wesentlichen quaderförmige Außenkontur bilden. Dies gilt auch für diejenigen Fälle, bei denen zwei oder mehrere Rohre 1 nebeneinander auf einer entsprechend ausgebildeten Dämmschicht 2 angebracht sind. Auch in diesem Falle kann jedem Rohr 1 eine Abdeckung 4 in der erläuterten Weise zugeordnet werden oder es ist, wie dargestellt, auch möglich, eine gemeinsame Abdeckung 4 für alle Rohre 1 vorzusehen, um wiederum in jedem Falle eine im wesentlichen quaderförmige Außenkontur zu erhalten.

Alle dargestellten Varianten können zudem nicht nur für gerade Rohrabschnitte verwendet werden, sondern insbesondere auch zur Dämmung von Kreuzungsbereichen, Heizkörperanbindungen, Verteiler/Sammleranschlußbereiche, Bögen und Abzweige. Selbstverständlich müssen in diesen Fällen die Dicken der Dämmschichten in den entsprechenden Bereichen angepaßt werden.

Das Dämmteil 3 und das Abdeckteil 4 können in allen Fällen aus demselben oder einem ähnlichen zur Wärme- und/oder Schalldämmung geeigneten Material bestehen, wobei das Material flexibel wie Schaumstoffe oder Kunststoffverbunde aus Polyethylen, Polypropylen, Polyurethan, Kautschuk, Baumwolle, Flachs und ähnliche oder steif wie beispielsweise Hartschäume aus Polyurethan, Glas, Gips oder Mineralfaser sein kann.

### Bezugszeichenliste

- 1: Rohr
- 2: Dämmschicht
- 3: Dämmteil
- 4: Abdeckteil
- 5: Ausnehmung
- 6: Wand
- 7: Ausnehmung
- 8: Wand
- 9: Materialverdünnung
- 10: Haken
- 11: Nut
- 12: Klettverschluß
- 13: Durchstecklaschenverschluß

## Patentansprüche

1. System zur Wärme- und/oder Schalldämmung von Rohrleitungen, insbesondere von auf Rohdecken verlegten Rohren (1), die selbst fluidführend sein oder fluidführende Rohre aufnehmen können, mit einem Dämmteil (3), welches wenigstens eine Dämmschicht (2) zwischen Rohr (1) und Decke in Form eines im Querschnitt im wesentlichen rechteckigen Streifens umfaßt, dessen Breite zumindest gleich und vorzugsweise etwas größer ist als der Außendurchmesser des Rohres (1),
dadurch **gekennzeichnet,**
daß ein Abdeckteil (4) vorgesehen ist, welches in einer der Dämmschicht (2) in Bezug auf das Rohr (1) diametral gegenüberliegenden Anordnung mit dem Rohr (1) und/oder dem Dämmteil (3) verbindbar ist, und daß das Abdeckteil (4) eine Außenkontur aufweist, die sich mit der Außenkontur des Dämmteils (3) zu einer im wesentlichen quaderförmigen Außenkontur ergänzt.

2. System nach Anspruch 1,
dadurch **gekennzeichnet,**
daß das Dämmteil (3) und/oder das Abdeckteil (4) an seiner dem Rohr (1) zugewandten Seite der Außenkontur des Rohres (1) zumindest teilweise komplementär angepaßt ist.

3. System nach einem der vorhergehenden Ansprüche,
dadurch **gekennzeichnet,**
daß das Dämmteil (3) und/oder das Abdeckteil (4) mit seitlich zum Rohr (1) verlaufenden Wänden (6) versehen ist.

4. System nach einem der vorhergehenden Ansprüche,
dadurch **gekennzeichnet,**
daß das Dämmteil (3) und/oder das Abdeckteil (4) auf das Rohr (1) aufklippsbar ausgestaltet sind.

5. System nach einem der vorhergehenden Ansprüche,
dadurch **gekennzeichnet,**
daß das Abdeckteil (4) als flacher Streifen ausgebildet ist und vorzugsweise mit einer Längsseite verschwenkbar an dem Dämmteil (3) angelenkt ist.

6. System nach Anspruch 3,
dadurch **gekennzeichnet,**
daß das Abdeckteil (4) im Querschnitt im wesentlichen T-förmig ausgebildet ist, wobei der Fuß der T-Form an die Außenkontur des Rohres (1) komplementär an- und zwischen die Wände (6) des Dämmteils (3) eingepaßt ist.

7. System nach Anspruch 3,
dadurch **gekennzeichnet,**
daß das Abdeckteil (4) im Querschnitt U-förmig ausgebildet ist, wobei die beiden Schenkel der U-Form seitlich zum Rohr (1) verlaufende Wände (8) bilden, welche die beiden Wände (6) des Dämmteils (3) seitlich übergreifen.

8. System nach einem der vorhergehenden Ansprüche,
dadurch **gekennzeichnet,**
daß das Dämmteil (3) in analoger Weise zur Aufnahme von mindestens zwei nebeneinander angeordneten Rohren (1) ausgebildet ist, und daß ein gemeinsames Abdeckteil (4) für alle Rohre (1) vorgesehen ist.

9. System nach einem der vorhergehenden Ansprüche,
dadurch **gekennzeichnet,**
daß die Dickenabmessungen des Abdeckteils (4) gering sind im Vergleich zur Dicke der Dämmschicht (2) und daß das Dämmteil (3) und das Abdeckteil (4) insbesondere im wesentlichen spiegelsymmetrisch zueinander ausgebildet sind.

10. System nach einem der vorhergehenden Ansprüche,
dadurch **gekennzeichnet,**
daß das Dämmteil (3) und/oder das Abdeckteil (4) aus flexiblem Material wie beispielsweise Schaumstoffe oder Kunststoffverbunde aus Polyethylen, Polypropylen, Polyurethan, Kautschuk, Baumwolle, Flachs und ähnlichem bestehen.

11. System nach einem der vorhergehenden Ansprüche,
dadurch **gekennzeichnet,**
daß das Dämmteil (3) und/oder das Abdeckteil (4) aus einem steifen Material wie beispielsweise Hartschäume aus Polyurethan, Glas, Gips oder Mineralfaser bestehen.

12. System nach einem der vorhergehenden Ansprüche,
dadurch **gekennzeichnet,**
daß das System neben geraden Abschnitten auch Kreuzungsabschnitte und/oder Verbindungsabschnitte zu Verbrauchern wie Heizkörper, sowie zu Verteilern und Sammlern und/oder gebogene Abschnitte und/oder Abzweigungen umfaßt.
